(19) **Europäisches Patentamt European Patent Office Office européen des brevets**

(11) **EP 4 467 458 B1**

(12) **EUROPEAN PATENT SPECIFICATION**

(45) Date of publication and mention of the grant of the patent:
**01.10.2025 Bulletin 2025/40**

(21) Application number: **23382495.2**

(22) Date of filing: **26.05.2023**

(51) International Patent Classification (IPC):
**B64D 17/62** (2006.01)    **B64D 47/08** (2006.01)
**B64D 17/74** (2006.01)    **B64D 1/08** (2006.01)

(52) Cooperative Patent Classification (CPC):
**B64D 17/62; B64D 1/08; B64D 17/74; B64D 47/08**

(54) **METHOD AND SYSTEM OF SAFE SEPARATION ANALYSIS AMONG ELEMENTS DROPPED WITH A PARACHUTE FROM AN AIRCRAFT**

VERFAHREN UND SYSTEM ZUR SICHEREN TRENNUNGSANALYSE ZWISCHEN MIT EINEM FALLSCHIRM AUS EINEM FLUGZEUG ABGEWORFENEN ELEMENTEN

PROCÉDÉ ET SYSTÈME D'ANALYSE DE SÉPARATION SÉCURISÉE ENTRE DES ÉLÉMENTS ABANDONNÉS D'UN PARACHUTE D'UN AÉRONEF

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**27.11.2024 Bulletin 2024/48**

(73) Proprietor: **Airbus Defence and Space, S.A.U. 28906 Getafe - Madrid (ES)**

(72) Inventors:
• **POLLARD, Jane**
  **Getafe (ES)**
• **FERNÁNDEZ RIERA, Jorge**
  **Getafe (ES)**

(74) Representative: **Elzaburu S.L.P.
Edificio Torre de Cristal
Paseo de la Castellana 259 C, planta 28
28046 Madrid (ES)**

(56) References cited:
**US-A1- 2011 121 138**

• MARISCAL-SANCHEZ F-JAVIER ET AL: "Computer Simulation of Paratrooper Deployment by Static Line from A400M", EADS CASA, 1 October 2006 (2006-10-01), pages 1 - 22, XP093091942, Retrieved from the Internet <URL:https://www.sto.nato.int/publications/STO%20Meeting%20Proceedings/RTO-MP-AVT-133/MP-AVT-133-03.pdf> [retrieved on 20231016]
• GHOREYSHI MEHDI ET AL: "A paratrooper model sensitivity analysis for personnel airdrop", AEROSPACE SCIENCE AND TECHNOLOGY, ELSEVIER MASSON, FR, vol. 122, 1 February 2022 (2022-02-01), XP086986916, ISSN: 1270-9638, [retrieved on 20220201], DOI: 10.1016/J.AST.2022.107391
• LI YANJUN ET AL: "Modelling of Parachute Airborne Clusters Flight Dynamics and Parachute Interactions", AEROSPACE, vol. 10, no. 1, 4 January 2023 (2023-01-04), pages 51, XP093091935, DOI: 10.3390/aerospace10010051

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the invention

The method and system object of this invention allows the evaluation of the risk of interference or contact between elements dropped from an aircraft, for instance, a load or a paratrooper, and the trailed deployment bags of the previous dropped elements. This risk is common to all military transport aircraft performing paratroopers' dispatch with static lines.

### Background of the invention

The following terminology is used in this document:

- Static Line (S/L): Fabric line that connects the deployment bag of the parachute with an anchor point of the aircraft thus, when the line is stretched, the force generated on the deployment bag releases the parachute from the bag while both the static line (S/L) and the deployment bag remain attached to the aircraft.

- Deployment bag (D-bag): Fabric bag where the parachute is packed before each jump.

- Stick size: Number of elements dropped, for instance, paratroopers jumping, in one go from the same exit of the aircraft and in the same pass over a drop zone.

Historically in transport aircrafts, the risk of interference between the elements dropped, load or paratrooper, and the trailed static lines (S/L) and deployment bags (D-bag) of the preceding dropped elements, for instance, paratroopers, was evaluated directly through flight testing by means of visual and qualitative assessment of expert people or analysts as part of the build-up process normally followed by each manufacturer to provide the corresponding capability of the aircraft to the customer.

Such qualitative methodologies mainly consisted of analysing videos of real jumps and static lines trailing tests recorded during flight testing plus the feedback obtained directly from the paratroopers after the jumps. However, none of them provided a means to quantify the real risk of interference and to predict the risk increment when the stick size is increased.

When the qualitative methods from legacy aircraft were used, the risk when increasing stick size during flight test was managed by applying an incremental approach and other means. However, this does not fully prevent from having a real contact between a paratrooper and the trailed deployment bags because the final evidence is actually the real jump in such conditions.

For example, it is known that in an aircraft a real contact happened during the first live confirmation jump with a full complement of 102 personnel that triggered several corrective actions to mitigate the risk for the biggest stick sizes, like reducing the angle of the air deflector or increasing the length of the static line.

As previously stated, during static-line jumps from an aircraft, the parachute of the jumper is released from the deployment bag after the jump once the static line is stretched to full length. While the parachute continues its inflation below and aft of the aircraft, the deployment bag remains attached to the aircraft by means of the static line.

The airflow around the aircraft produces a drag force on the deployment bags that normally keep them close to the aircraft fuselage and in a relatively high position out of the path of following jumpers. However, when the number of paratroopers is increased in the same stick, the accumulation of static lines and deployment bags trailed behind the paratrooper door (PTD) results in an increment of the weight of the bundle of deployment bags and the corresponding gravity force that makes the bundle drop to a lower position, thus closer to the paratroopers' initial trajectories. Therefore, the higher the number of paratroopers jumping in a stick, or the higher the number of elements being dropped, the higher the risk of interference with the deployment bags due to their lower vertical position. Such risk can also happen with lower number of paratroopers if the movement of the deployment bags is significant and includes frequent downward movement.

Document XP093091942 discloses a computer simulation with the capability to predict paratrooper deployment.

### Summary of the invention

The method and system object of the invention develops an approach of the risk of interference based on the probabilities of the elements dropped to cross an area of movement of the deployment bags.

The method comprises the following steps:

- providing at least a camera device located on the aircraft and pointing towards a dropping area. Pointing towards means that the camera is located such that it is configured to take pictures or recordings of the dropping area. The dropping area is the area in which the door through which the elements are dropped is located. It also comprises the surrounding area of the door,

- dropping a plurality of deployment bags from the aircraft over the dropping area. Thus, the deployment bags are let fall through the door located in the dropping area,
- dropping a plurality of elements, for instance, loads or paratroopers, from the aircraft over the dropping area, the elements dropped are joined to a deployment bag,
- recording by the at least one camera device the images of the trajectories of the deployment bags and of the elements dropped,
- displaying in a visual computer program photograms of the recorded images,
- identifying over the photograms a movement area for each deployment bag corresponding to an area in which the deployment bag is moved along a period of time, the movement area having boundaries,
- identifying over the photograms the trajectories of each element dropped,
- overlapping in the visual computer program the photograms of each element dropped trajectory and of each deployment bag movement area to determine the number of deployment bag movement areas that is crossed by a dropped element trajectory,
- calculating in a processing unit the risk of interference for each pair of element dropped trajectory and of deployment bag movement area by determining the number of deployment bag movement areas that is crossed by an element dropped trajectory for the total number of overlapped images, wherein the number of overlapped images is as follows:

Number of overlapped images = Number of deployment bags movement areas * Number of elements' trajectories * Number of camera devices Overlap means that the images are one on top of the other. Cross is understood as the element dropped trajectory passes through or across the deployment bag movement areas, therefore the element dropped trajectory passes across the boundaries of the deployment bag movement area.

- calculating in the processing unit the probability of global risk interference, by any probability mean or method,
- comparing in the processing unit said risk of interference with a probability threshold for achieving a safe separation between elements when dropped from an aircraft.

According to the above, the invention develops a digital analysis method to calculate the probabilities taking into account the following requirements:

- Video recordings of deployment bags behavior. The behavior of the deployment bags at the flight conditions under study and for a given stick size shall be recorded by, for instance, video cameras.

- Video recordings of trajectories of the elements dropped. For instance, the position of the head of the paratroopers during the first period after the jump. The recording time is typically one second, which is, for instance, the time when the paratrooper is passing the area of trailed deployment bags. Such time can vary depending on the aircraft shape. These trajectories can be obtained by either individual jumps or during small stick sizes when there is a high confidence that the risk of interference is nil or negligible.

Note that, in case of paratroopers, different from the deployment bags movement area, the flight conditions at which the jumps are performed is not relevant for the analysis as they will be mainly driven by the exit technique of the paratrooper so the same trajectory can be achieved at different flight conditions.

To calculate the risk of interference between a certain trajectory and a certain deployment bag movement area, the corresponding video images shall be carefully overlapped to determine the portion of the deployment bags movement area that is actually crossed by the dropped element trajectory.

For different numbers of deployment bags, several deployment bag movement areas are possible. But also, several movement areas for the same number of deployment bags are possible in order to capture the variability of the phenomenon.

This step shall be conducted for each pair of deployment bag movement area -dropped element trajectory available for the analysis and for each camera position, so the total number of overlapped images will be the product of all of them:

Number of overlapped images = Number of D-bags movement areas * Number of Paratroopers' trajectories * Number of cameras available for the analysis.

Note that the number of overlapped images that may need to be generated can be very high. For instance, an in-house tool can be developed to automatically generate the corresponding overlapped images according to the information stored in a database.

The above risk may be agreed with a certification authority as a pass/fail criteria to determine whether the risk of interference associated to a certain stick size and flight conditions is acceptable or not. The risk of having a paratrooper hurt due to an interference with the trailed static line and deployment bag in a stick of several paratroopers jumping from the paratrooper doors must be smaller than a certain probability threshold with a certain level of significance.

In order to allow a more accurate prediction of elements dropped interference with the deployment bags, and different from the qualitative analysis methods used in the past for other legacy aircraft, the invention develops a method of analysis to quantify the potential risk of interference by means of the evaluation of the probability of finding the deployment bags in an specific area and the probability of the trajectories of the elements dropped passing through this deployment bag area.

It is also an object of the invention a system of safe separation analysis among elements dropped with a parachute from an aircraft. The system comprising:

- at least a camera device configured to be located on the aircraft pointing towards a dropping area, the camera device configured to record images of trajectories of deployment bags and of elements dropped from the aircraft over the dropping area,
- a visual computer program configured for:

  - displaying photograms of the recorded images and identifying over the photograms a movement area for each deployment bag corresponding to an area in which the deployment bag is moved along a period of time and the trajectories of each element dropped, the movement area having boundaries,
  - overlapping the photograms of each element dropped trajectory and of each deployment bag movement area to determine the number of deployment bag movement areas that is crossed by a dropped element's trajectory,

- a processing unit configured for:

  - calculating the risk of interference for each pair of trajectory of a dropped element and of deployment bag movement area for the total number of overlapped images, the total number of overlapped images configured to be calculated as follows:

    Number of overlapped images = Number of deployment bags movement areas * Number of dropped element's trajectories * Number of camera devices

  - calculating the probability of global risk interference (7),

- comparing said global risk of interference (7) with a probability threshold for achieving a safe separation between elements dropped from an aircraft (1).

The above method and system allow to provide the aircraft with a number of static lines, i.e., a stick size appropriate for the determined threshold risk. The safe separation depends on the stick size because the more paratroopers jump, the more static lines and deployment bags are towed by the aircraft and their weight makes the separation with the paratroopers' trajectories smaller.

This quantitative analysis of the risk of interference provides several advantages compared to the old qualitative methods like:

- Evaluation of the acceptability of the identified risk against a certain acceptability pass/fail criteria.
- Increment of the safety during flight testing as the areas where the risk is deemed unacceptable can be identified beforehand without the need of doing real jumps in such conditions.
- Evaluation of the risk of interference whatever the flight conditions, aircraft configuration and stick size.
- Definition of a baseline metric for comparison and evaluation of the effect of the different factors related to the phenomenon.

**Description of the figures**

To complete the description and to provide for a better understanding of the invention, a set of drawings is provided. Said drawings form an integral part of the description and illustrate preferred embodiments of the invention. The drawings comprise the following figures.

Figure 1 shows a lateral perspective view of a photogram of the rear part of an aircraft and its dropping area and an example of trailed static lines and deployment bags.

Figure 2 shows a top perspective view of a photogram of the rear part of an aircraft and its dropping area, a deployment bag movement area, and the trajectory of a paratrooper.

Figure 3 shows an example of deployment bags probability calculation.

Figure 4 shows a top perspective view of two overlapped photograms of the rear part of an aircraft and its dropping area, one for the deployment bag movement area and the other for the trajectory of a paratrooper.

Figure 5 shows an example of probability of interference calculation.

**Detailed description of the invention**

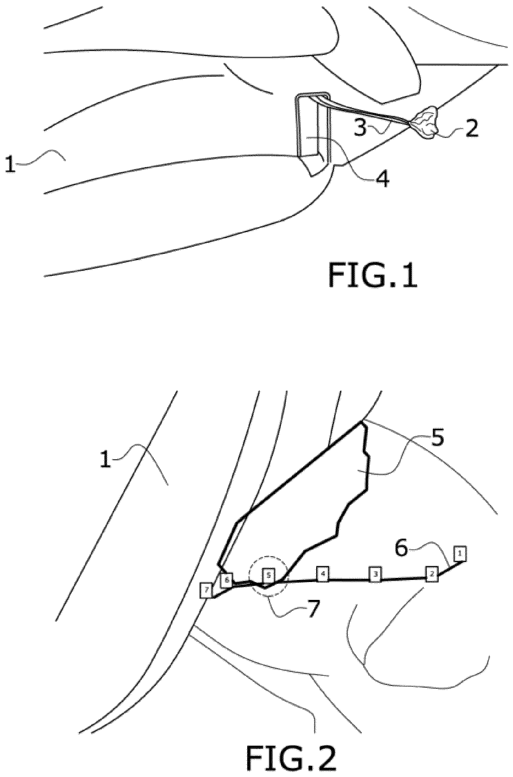

Figure 1 discloses an image taken form a camera device located in the aircraft (1) and showing a dropping area that comprises a part of the aircraft (1), for instance, under a wing, an exit door (4) and static lines (3) and deployment bags (2) attached to the aircraft (1) by means of the static lines (3).

Figure 2 discloses a photogram of an image taken form a camera device located in the aircraft (1) and showing a movement area (5) of a deployment bag (2) along a period of time. The trajectory of a paratrooper (6) is also shown.

Figure 2 shows an example of the evaluation of the videos of a certain paratrooper trajectory (6) with a certain deployment bag movement area (5) obtained during flight test. An interference (7) between the movement area (5) of the deployment bag (2) and the trajectory of the paratroopers (6) is shown. It indicates that there is some risk of interference (7), although it seems to be small.

In an embodiment, from an operational point of view, the risk of interference (7) can be understood as the risk of the paratrooper suffering an injury due to an interference (7) with the trailed static line (3) and deployment bag (2), thus it can be expressed as follows:

$$P_I = P_T * P_D * P_H$$

where:

- $P_I$ is the probability of a paratrooper suffering an injury due to interference.
- $P_T$ is the probability of the paratrooper's trajectory (6) intersecting the deployment bags movement area (5).
- $P_D$ is the probability of the deployment bags (2) being at an intersected area. The intersected area is the part of the deployment bags movement area (5) that is below the trajectory of the paratrooper (6) when overlapping them. Therefore, it is the area located between the paratrooper's trajectory and the boundary of the deployment bag movement area (5) farthest from the aircraft;
- $P_H$ is the probability of, in case of interference, the paratrooper suffers an injury.

Note that the probability of paratrooper injury due to interference ($P_H$) could not be evaluated as there is no data in existing literature and due to the variability of the phenomenon, thus a conservative approach may be applied assuming that the paratrooper is always injured in case of interference, so $P_H$ is set to 1. This is, in case of interference (7), the paratrooper always suffers an injury.

Therefore, the product of the other two components ($P_T$ and $P_D$) determines the final risk of interference (7) and it depends on:

- Number of trailed deployment bags (2) which is equivalent to the "stick size" when doing real jumps.
- Flight conditions and aircraft (1) configuration under test.

According to the invention, the behavior of the deployment bags (2) at the flight conditions under study and for a given stick size is recorded by, for instance, video cameras. In an embodiment, two types of tests may be performed:

- Static lines trailing tests: the static lines (3) and deployment bags (2) are manually dispatched and are trailed during a certain period of time that shall be long enough to capture the variability of the deployment bags (2) position in those flight conditions. In an embodiment, a period between twenty-five and thirty-five seconds is considered. More specifically thirty seconds is also considered.

• Live Jumps tests: The deployment bags movement area (5) when released during live jumps for "n" deployment bags (2), this is, for a stick size of "n+1" paratroopers shall cover from the release of the parachute from the deployment bag (2) of the first jump until just before the release of the parachute of jump "n+1".

In an embodiment, both the deployment bags (2) and paratroopers or elements tests shall be recorded by two different cameras placed so that their views are approximately perpendicular. Ideally, three cameras pointing to the dropping area making a Cartesian right-handed (or left-handed) trihedral are needed. Two cameras are enough as results will be conservative. For example, two cameras, one placed at the engine's nacelle below the wings and the other installed on the upper part the paratrooper door (4) frame can be considered.

In an embodiment related to paratroopers, to evaluate the risk of interference (7) for a certain stick size and flight conditions, the following process shall be followed:

1) Identification of the deployment bags movement areas (5). From the videos recorded during flight test, boundaries of the deployment bags movement areas (5) shall be obtained by tracking the position of the trailed deployment bags (2) at each instant, frame by frame, along a representative or agreed period of time, for instance, thirty seconds.

2) Identification of paratrooper's trajectories (6). The trajectory (6) of the paratroopers could be defined, for instance, by tracking the position of the head from the first moment the paratrooper is no longer in contact with the aircraft (1) until it has passed the area where the deployment bags (2) are trailed, typically one second.

The number of deployment bags movement area (5) used in the method shall cover the variability of the deployment bags (2) behavior at each condition. Therefore, several movement areas (5) at the same conditions shall be used.

The number of paratroopers' trajectories (6) used in the method shall cover the possible variations of the parameters that can affect to the paratroopers' trajectories (6) such as the weight of the paratrooper, the height, etc. and, in particular, the exit technique which is one of the main influencing parameters.

3) Probability of finding the deployment bags (2) in a certain intersection area. Within the deployment bags movement areas (5) identified in step 1), the probability of finding the deployment bags (2) is one. They are always inside the defined boundaries, and outside them is nil. To quantify the probability of finding the deployment bags (2) in a particular area, the intersected area, inside the defined boundaries, for instance, at the bottom part of the movement area (5), the movement of the deployment bags (2) could, for instance, be determined pixel by pixel by means of the detection of differences in the colour of the pixel between consecutive frames. Bottom means the lower limit in the photogram of the deployment bags movement areas (5). For instance, in a Z-view towards the lower Zs, i.e., the boundary of the deployment bag movement area (5) farthest from the aircraft.

Such probability represents the risk of interference (7) for that particular case. Then, once the risk of interference (7) for all available pairs is known, the global risk of interference (7) can be evaluated.

Note that this step is based on the recognition of movement at each pixel, thus a digital computation is needed. For instance, an in-house tool can be developed to automatically detect the deployment bags (2) movement and generate a probability heat map.

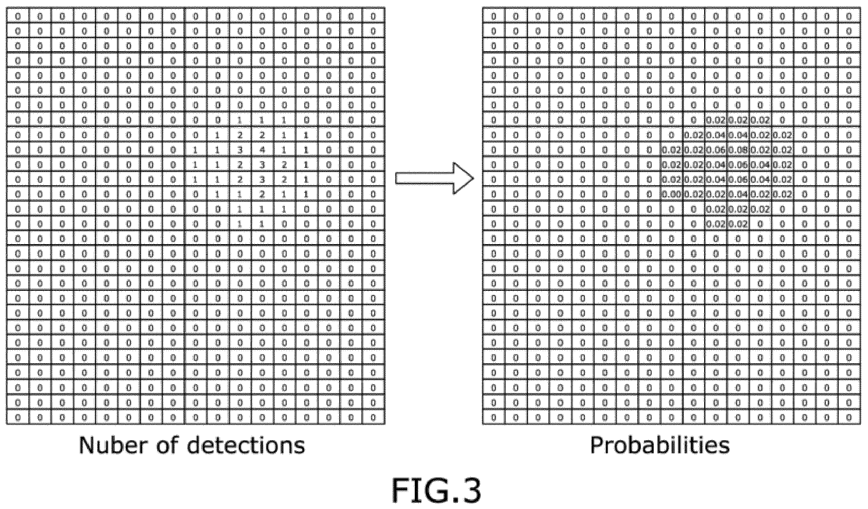

As depicted in figure 3, the output of this step is an array containing the number of detected changes on each pixel. The size of the array is equal to the resolution of the video cameras.

This array shall be divided by the total number of detections in the array to obtain the corresponding probability of finding the deployment bags (2) at a certain pixel. In other words, the probability of the deployment bags (2) to pass over such pixel.

When calculating the probabilities of finding the deployment bags (2) in a certain intersection area of the movement area (5) by means of the pixel colour at each frame, the movements of the background or of other elements on the video that are not object of study may be also recognized. Therefore, the proper means or filters shall be used to assure that only the movement of the deployment bags (2) is tracked. If that is not possible, results will tend to be conservative.

4) The corresponding video images shall be carefully overlapped to determine the portion of the deployment bags movement area (5) that is actually crossed by the paratrooper's trajectory (6).

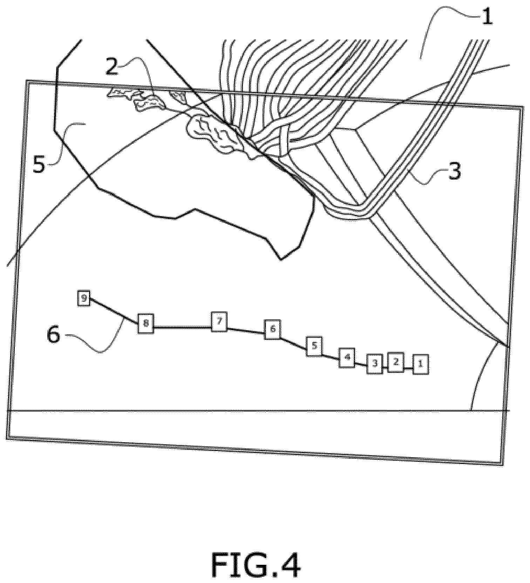

To allow a perfect overlapping, the position of the cameras in the flights for the deployment bags (2) and for the paratroopers' trajectories (6) shall be exactly the same. However, the cameras may be installed on non-fixed places. The relative position of the wing mounted camera with regards to the fuselage may be different depending on the flight conditions, the weight of the aircraft, etc. A proper overlapping shall be done by rotating and/or resizing one of the pictures over the other to assure that the views are properly matched. This is depicted in figure 4.

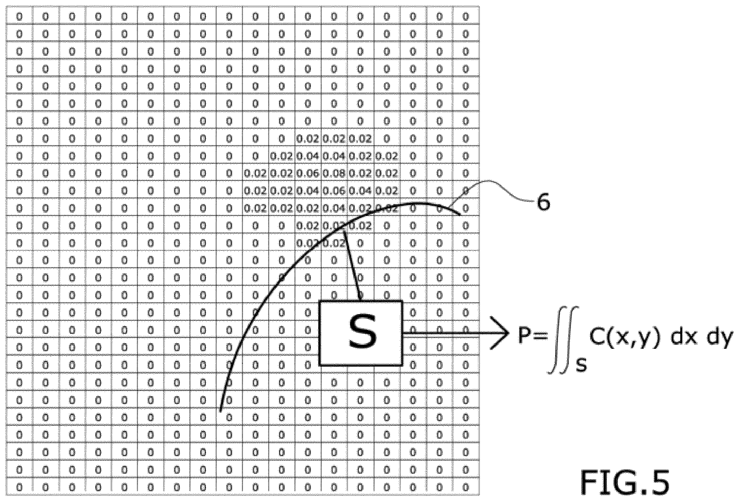

5) Calculation of interference (7) probabilities. For each combination of images, movement area (5) + paratrooper trajectory (6) + camera, the probability of having an interference (7) shall be calculated by means of the sum of the probabilities to find the deployment bags (2) in a position below the paratrooper trajectory (6), i.e., at the intersected area, as shown in figure 5.

One probability for each camera will be obtained. The risk of interference (7) for the pair movement area (5) + paratrooper trajectory (6) will be the minimum of the probabilities obtained on each view. For example, if the paratrooper trajectory (6) crosses on one view but not the other, then the probability is zero as it needs to cross in both to be a proper interference (7).

This risk of interference (7) obtained after combining the probabilities from the different cameras directly represents the product ($P_T*P_D$) object of the study, thus the probability of getting a paratrooper hurt due to interference can be estimated with the formula described before.

$$P_I = P_T * P_D * P_H = P_T * P_D * 1 = Images\ overlapping\ probability$$

6) Assessment of Global Risk of Interference. In step 5), an individual risk of interference for each pair of movement area (5) + paratrooper trajectory (6) available for the analysis will be obtained. In order to obtain the global risk associated to a particular scenario in terms of flight conditions, aircraft configuration, stick size, etc., the obtained distribution of probabilities shall be evaluated from a statistical point of view assuming that they represent a suitable sample of the population for which the global risk is to be calculated. Therefore, such distribution of probabilities can be used to make inferences about the population.

It has to be noted that in case that the trajectory of the paratrooper (6) crosses an area were the deployment bags (2) are most of the time, normally at the middle of the contour), the methodology will indicate that the intersected probability is smaller than 100% (probably around 50%) when actually the risk of interference should be 100% or close to it because the deployment bags (2) are almost always there. Therefore, in those cases, a 100% probability shall be directly considered in a conservative way.

As an example of application, the described methodology was used for the certification of the paratrooping capability of an aircraft to drop up to 58 paratroopers from one exit door (4).

A large number of cases shall be analysed to properly characterize the distribution of probabilities that represent the global risk of interference (7). For instance, a value of at least 20000 pairs of "movement area (5) + paratrooper trajectory (6)" per condition was used as a reference to maximize the confidence on the obtained results.

The method of the invention allows to:

○ Quantify the risk of interference (7) on each particular scenario.
○ Increase the understanding on the phenomenon and compare the effect of different parameters like flight conditions, aircraft configuration, i.e., to compare the results obtained with different versions of a paratrooper door protector which is a protector that is installed in the paratrooper doors of the aircraft to avoid the static lines (3) getting snagged on the mechanisms of the door (4).
○ Compare the risk of interference obtained with different types of parachutes or different types of static lines (3) and deployment bags (2).
○ Increase the safety during flight testing by means of providing a better understanding of the risk of interference (7) when applying an incremental approach.
○ Define and agree with the certification authorities a pass/fail criteria based on a clear metric.
○ Certify the Paratrooping capability up to a number of paratroopers from one door (4) in compliance with the contractual requirements and satisfying the customer expectations.

**Claims**

1. Method of safe separation analysis among elements dropped with a parachute from an aircraft (1), the parachute being deployed from a deployment bag (2) joined to a static line (3), the method comprising the following steps:

   • providing at least a camera device located on the aircraft (1) and pointing towards a dropping area,
   • dropping a plurality of deployment bags (2) from the aircraft (1) over the dropping area,
   • dropping a plurality of elements from the aircraft (1) over the dropping area,
   • recording by the at least one camera device the images of the trajectories of the deployment bags (2) and of the elements dropped,
   • displaying in a visual computer program photograms of the recorded images,
   • identifying over the photograms a movement area (5) for each deployment bag (2) corresponding to an area in which the deployment bag (2) is moved along a period of time, the movement area (5) having boundaries,
   • identifying over the photograms the trajectories (6) of each dropped element,
   • overlapping in the visual computer program the photograms of each element trajectory (6) and of each deployment bag movement area (2) to determine the number of deployment bag movement areas (2) that is crossed by an element trajectory (6),
   • calculating in a processing unit the risk of interference (7) for each pair of element trajectory (6) and of deployment bag movement area (2) by determining the number of deployment bag movement areas (2) that is crossed by an element trajectory (6) for the total number of overlapped images, wherein the number of overlapped images is as follows:

   Number of overlapped images = Number of deployment bags movement areas (5) * Number of elements' trajectories (6) * Number of camera devices.

   • calculating in the processing unit the probability of global risk interference (7),
   • comparing said global risk of interference (7) with a probability threshold for achieving a safe separation between elements dropped from an aircraft (1).

2. Method of safe separation analysis among elements dropped with a parachute from an aircraft (1), according to claim 1, wherein it comprises the step of providing two camera devices located such that they point to the dropping area approximately perpendicularly to each other.

3. Method of safe separation analysis among elements dropped with a parachute from an aircraft (1), according to claim 2, wherein one camera device is placed at an engine's nacelle below the wings of the aircraft (1) and the other camera device is placed on an upper part of an exit door (4) frame.

4. Method of safe separation analysis among elements dropped with a parachute from an aircraft (1), according to claim 1, wherein three cameras pointing to the dropping area in a Cartesian right-handed or left-handed trihedral are provided.

5. Method of safe separation analysis among elements dropped with a parachute from an aircraft (1), according to any preceding claim, wherein the element dropped is a paratrooper jumping from the aircraft (1).

6. Method of safe separation analysis among elements dropped with a parachute from an aircraft (1), according to claim 5, wherein for calculating the risk of having an interference (7) for each pair of element trajectory (6) and of deployment bag movement area (2) the following formulae is applied:

$$P_I = P_T * P_D * P_H$$

   • $P_I$ is the probability of a paratrooper suffering an injury due to interference (7);
   • $P_T$ is the probability of the paratrooper's trajectory intersecting the deployment bag movement area (5);
   • $P_D$ is the probability of the deployment bag (2) being at an intersected area which is the area located between the paratrooper's trajectory and the boundaries of the deployment bag movement area (5) located farthest from the aircraft (1);
• $P_H$ is the probability of, in case of interference (7), the paratrooper suffers an injury.

7. Method of safe separation analysis among elements with a parachute from an aircraft (1), according to claim 6, wherein for calculating the probability of finding deployment bags (2) at the intersected area, the movement of the deployment bags (2) is determined pixel by pixel in the photograms by means of the detection of differences in the colour of the pixel between consecutive photograms.

8. Method of safe separation analysis among elements dropped with a parachute from an aircraft (1), according to any preceding claim, wherein when dropping a plurality of deployment bags (2), the aircraft (1), the deployment bags (2) and the static lines (3) are manually dispatched and are trailed during a certain period of time.

9. Method of safe separation analysis among elements dropped with a parachute from an aircraft (1), according to claim 8, wherein the period of time is between twenty-five and thirty-five seconds.

10. Method of safe separation analysis among elements dropped with a parachute from an aircraft (1), according to claim 9, wherein the recording time for the elements dropped is approximately one second.

11. System for safe separation analysis among elements dropped with a parachute from an aircraft (1), the parachute being deployed from a deployment bag (2) joined to a static line (3), the system comprising:

   • at least a camera device configured to be located on the aircraft (1) pointing towards a dropping area, the camera device configured to record images of trajectories of deployment bags (2) and of elements dropped from the aircraft (1) over the dropping area,
   • a visual computer program configured for:

      ◦ displaying photograms of the recorded images and identifying over the photograms a movement area (5) for each deployment bag (2) corresponding to area in which the deployment bag (2) is moved along a period of time and identifying the trajectories of each element dropped (6), the movement area having boundaries,
      ◦ overlapping the photograms of each element trajectory (6) and of each deployment bag movement area (2) to determine the number of deployment bag movement areas (2) that is crossed by a dropped element's trajectory (6),

   • a processing unit configured for:

      • calculating the risk of interference (7) for each pair of element trajectory (6) and of deployment bag movement area (2) for the total number of overlapped images, the total number of overlapped images calculated as follows:

      Number of overlapped images = Number of deployment bags movement areas (5) * Number of element's trajectories (6) * Number of camera devices

      • calculating the probability of global risk interference (7),
      • comparing said global risk of interference (7) with a probability threshold for achieving a safe separation between elements dropped from an aircraft (1).

**Patentansprüche**

1. Verfahren zur Analyse einer sicheren Trennung zwischen mit einem Fallschirm aus einem Flugzeug (1) abgeworfenen Elementen, wobei der Fallschirm von einem Auslösecontainer (2) aus ausgelöst wird, der mit einer Aufziehleine (3) verbunden ist, wobei das Verfahren die folgenden Schritte umfasst:

   • Bereitstellen mindestens einer Kameravorrichtung, die an dem Flugzeug (1) angeordnet ist und auf einen Abwurfbereich gerichtet ist,
   • Abwerfen einer Vielzahl von Auslösecontainern (2) aus dem Flugzeug (1) über dem Abwurfgebiet,
   • Abwerfen einer Vielzahl von Elementen aus dem Flugzeug (1) über dem Abwurfgebiet,

- Aufnehmen der Bilder der Flugbahn der Auslösecontainer (2) und der abgeworfenen Elemente durch die mindestens eine Kameravorrichtung,
- Anzeigen von Fotogrammen der aufgenommenen Bilder in einem visuellen Computerprogramm,
- Identifizieren eines Bewegungsbereichs (5) für jeden Auslösecontainer (2), der einem Bereich entspricht, in den der Auslösecontainer (2) über eine Zeitspanne bewegt wird, über die Fotogramme, wobei der Bewegungsbereich (5) Grenzen aufweist,
- Identifizieren der Flugbahn (6) jedes abgeworfenen Elements über die Fotogramme,
- Überlagern der Fotogramme jeder Elementflugbahn (6) und jedes Auslösecontainer-Bewegungsbereichs (2) in dem visuellen Computerprogramm, um die Anzahl von Auslösecontainer-Bewegungsbereichen (2) zu bestimmen, die von einer Elementflugbahn (6) durchquert wird,
- Berechnen des Risikos einer Behinderung (7) für jedes Paar von Elementflugbahn (6) und Auslösecontainer-Bewegungsbereich (2) in einer Verarbeitungseinheit durch Bestimmen der Anzahl von Auslösecontainer-Bewegungsbereichen (2), die von einer Elementflugbahn (6) durchquert wird, für die Gesamtzahl von überlappten Bildern, wobei die Anzahl von überlappten Bildern wie folgt ist:

Anzahl der überlappten Bilder = Anzahl der Auslösecontainer-Bewegungsbereiche (5) * Anzahl der Flugbahnen (6) der Elemente * Anzahl der Kameravorrichtungen,

- Berechnen der Wahrscheinlichkeit des globalen Risikos einer Behinderung (7) in der Verarbeitungseinheit,
- Vergleich des globalen Risikos einer Behinderung (7) mit einem Wahrscheinlichkeitsschwellenwert zum Erreichen einer sicheren Trennung zwischen aus einem Flugzeug (1) abgeworfenen Elementen.

2. Verfahren zur Analyse einer sicheren Trennung zwischen mit einem Fallschirm aus einem Flugzeug (1) abgeworfenen Elementen nach Anspruch 1, wobei es den Schritt des Bereitstellens von zwei Kameravorrichtungen umfasst, die derart angeordnet sind, dass sie annähernd senkrecht zueinander auf den Abwurfbereich gerichtet sind.

3. Verfahren zur Analyse einer sicheren Trennung zwischen mit einem Fallschirm aus einem Flugzeug (1) abgeworfenen Elementen nach Anspruch 2, wobei eine Kameravorrichtung an einer Triebwerksgondel unter den Flügeln des Flugzeugs (1) platziert ist und die andere Kameravorrichtung an einem oberen Teil des Rahmens einer Ausgangstür (4) platziert ist.

4. Verfahren zur Analyse einer sicheren Trennung zwischen mit einem Fallschirm aus einem Flugzeug (1) abgeworfenen Elementen nach Anspruch 1, wobei drei Kameras bereitgestellt sind, die in einem kartesischen Rechts- oder Linkstrieder auf den Abwurfbereich gerichtet sind.

5. Verfahren zur Analyse einer sicheren Trennung zwischen mit einem Fallschirm aus einem Flugzeug (1) abgeworfenen Elementen nach einem der vorhergehenden Ansprüche, wobei das abgeworfene Element ein Fallschirmjäger ist, der aus dem Flugzeug (1) springt.

6. Verfahren zur Analyse einer sicheren Trennung zwischen mit einem Fallschirm aus einem Flugzeug (1) abgeworfenen Elementen nach Anspruch 5, wobei zum Berechnen des Risikos des Auftretens einer Behinderung (7) für jedes Paar von Elementflugbahn (6) und Auslösecontainer-Bewegungsbereich (2) die folgende Formel angewandt wird:

$$P_I = P_T * P_D * P_H$$

- wobei $P_I$ die Wahrscheinlichkeit ist, dass ein Fallschirmjäger aufgrund einer Behinderung (7) eine Verletzung erleidet;
- $P_T$ die Wahrscheinlichkeit ist, dass sich die Flugbahn des Fallschirmjägers und der Bewegungsbereich des Auslöscontainers schneiden (5);
- $P_D$ die Wahrscheinlichkeit ist, dass sich der Auslösecontainer (2) in einem Schnittbereich befindet, der der Bereich ist, der zwischen der Flugbahn des Fallschirmjägers und den Grenzen des Auslösecontainer-Bewegungsbereichs (5), der am weitesten von dem Flugzeug (1) entfernt ist, angeordnet ist;
- $P_H$ die Wahrscheinlichkeit ist, dass der Fallschirmjäger im Falle einer Behinderung (7) eine Verletzung erleidet.

7. Verfahren zur Analyse einer sicheren Trennung zwischen mit einem Fallschirm aus einem Flugzeug (1) abgeworfenen Elementen nach Anspruch 6, wobei zum Berechnen der Wahrscheinlichkeit des Findens von Auslösecontainern (2) in dem Schnittbereich die Bewegung der Auslösecontainer (2) Pixel für Pixel in den Fotogrammen durch die Erfassung von Unterschieden der Farbe des Pixels zwischen aufeinanderfolgenden Fotogrammen bestimmt wird.

8. Verfahren zur Analyse einer sicheren Trennung zwischen mit einem Fallschirm aus einem Flugzeug (1) abgeworfenen Elementen nach einem der vorhergehenden Ansprüche, wobei beim Abwerfen einer Vielzahl von Auslösecontainern (2) das Flugzeug (1), die Auslösecontainer (2) und die Aufziehleinen (3) manuell abgesendet werden und während einer bestimmten Zeitspanne verfolgt werden.

9. Verfahren zur Analyse einer sicheren Trennung zwischen mit einem Fallschirm aus einem Flugzeug (1) abgeworfenen Elementen nach Anspruch 8, wobei die Zeitspanne zwischen fünfundzwanzig und fünfunddreißig Sekunden beträgt.

10. Verfahren zur Analyse einer sicheren Trennung zwischen mit einem Fallschirm aus einem Flugzeug (1) abgeworfenen Elementen nach Anspruch 9, wobei die Aufnahmezeit für das abgeworfene Element etwa eine Sekunde beträgt.

11. System zur Analyse einer sicheren Trennung zwischen mit einem Fallschirm aus einem Flugzeug (1) abgeworfenen Elementen, wobei der Fallschirm von einem Auslösecontainer (2) aus ausgelöst wird, der mit einer Aufziehleine (3) verbunden ist, wobei das System Folgendes umfasst:

  • mindestens eine Kameravorrichtung, die zum Anordnen an dem Flugzeug (1) und Richten auf einen Abwurfbereich konfiguriert ist, wobei die Kameravorrichtung zum Aufnehmen von Bildern von Flugbahnen von Auslösecontainern (2) und von aus dem Flugzeug (1) abgeworfenen Elementen über dem Abwurfbereich konfiguriert ist,
  • ein visuelles Computerprogramm, das zu Folgendem konfiguriert ist:

    ◦ Anzeigen von Fotogrammen der aufgenommenen Bilder und Identifizieren eines Bewegungsbereichs (5) für jeden Auslösecontainer (2), der einem Bereich entspricht, in den der Auslösecontainer (2) über eine Zeitspanne bewegt wird, und Identifizieren einer Flugbahn jedes abgeworfenen Elements (6), wobei der Bewegungsbereich Grenzen aufweist,
    ◦ Überlagern der Fotogramme jeder Elementflugbahn (6) und jedes Auslösecontainer-Bewegungsbereichs (2), um die Anzahl von Auslösecontainer-Bewegungsbereichen (2) zu bestimmen, die von einer Flugbahn (6) des abgeworfenen Elements durchquert wird,

  • eine Verarbeitungseinheit, die zu Folgendem konfiguriert ist:

    • Berechnen des Risikos einer Behinderung (7) für jedes Paar von Elementflugbahn (6) und Auslösecontainer-Bewegungsbereich (2) für die Gesamtzahl von überlappten Bildern, wobei die Gesamtanzahl von überlappten Bildern wie folgt berechnet wird:

    Anzahl der überlappten Bilder = Anzahl der Auslösecontainer- Bewegungsbereiche (5) * Anzahl der Flugbahnen (6) der Elemente * Anzahl der Kameravorrichtungen,

    • Berechnen der Wahrscheinlichkeit des globalen Risikos einer Behinderung (7),
    • Vergleich des globalen Risikos einer Behinderung (7) mit einem Wahrscheinlichkeitsschwellenwert zum Erreichen einer sicheren Trennung zwischen aus einem Flugzeug (1) abgeworfenen Elementen.

## Revendications

1. Procédé d'analyse de séparation en sécurité entre des éléments largués en parachute à partir d'un aéronef (1), le parachute étant déployé à partir d'un sac de déploiement (2) relié à une sangle d'ouverture automatique (3), le procédé comprenant les étapes suivantes consistant à :

  • fournir au moins un dispositif de caméra situé sur l'aéronef (1) et pointant vers une zone de largage,
  • larguer une pluralité de sacs de déploiement (2) à partir de l'aéronef (1) au-dessus de la zone de largage,

• larguer une pluralité d'éléments à partir de l'aéronef (1) au-dessus de la zone de largage,
• enregistrer par l'au moins un dispositif de caméra les images des trajectoires des sacs de déploiement (2) et des éléments largués,
• afficher dans un programme d'ordinateur de visualisation des photogrammes des images enregistrées,
• identifier sur les photogrammes une zone de déplacement (5) pour chaque sac de déploiement (2) correspondant à une zone dans laquelle le sac de déploiement (2) se déplace sur une période de temps, la zone de déplacement (5) présentant des limites,
• identifier sur les photogrammes les trajectoires (6) de chaque élément largué,
• superposer dans le programme d'ordinateur de visualisation les photogrammes de chaque trajectoire (6) d'élément et de chaque zone de déplacement de sac de déploiement (2) afin de déterminer le nombre de zones de déplacement de sac de déploiement (2) qui sont traversées par une trajectoire (6) d'élément,
• calculer dans une unité de traitement le risque d'interférence (7) pour chaque paire de trajectoire (6) d'élément et de zone de déplacement de sac de déploiement (2) en déterminant le nombre de zones de déplacement de sac de déploiement (2) qui sont traversées par une trajectoire (6) d'élément pour le nombre total d'images superposées, dans lequel le nombre d'images superposées est le suivant :

Nombre d'images superposées = Nombre de zones de déplacement de sacs de déploiement (5) * Nombre de trajectoires (6) d'élément * Nombre de dispositifs de caméra.

• calculer dans l'unité de traitement la probabilité d'un risque d'interférence (7) global,
• comparer ledit risque d'interférence (7) global avec un seuil de probabilité permettant d'obtenir une séparation en sécurité entre des éléments largués d'un aéronef (1).

2. Procédé d'analyse de séparation en sécurité entre des éléments largués en parachute à partir d'un aéronef (1), selon la revendication 1, dans lequel il comprend l'étape consistant à fournir deux dispositifs de caméra situés de sorte qu'ils pointent vers la zone de largage approximativement perpendiculairement l'un à l'autre.

3. Procédé d'analyse de séparation en sécurité entre des éléments largués en parachute à partir d'un aéronef (1), selon la revendication 2, dans lequel un dispositif de caméra est disposé au niveau d'une nacelle de moteur au-dessous des ailes de l'aéronef (1) et l'autre dispositif de caméra est disposé sur une partie supérieure d'un cadre de porte de sortie (4).

4. Procédé d'analyse de séparation en sécurité entre des éléments largués en parachute à partir d'un aéronef (1), selon la revendication 1, dans lequel trois caméras pointant vers la zone de largage dans un trièdre cartésien droitier ou gaucher sont prévues.

5. Procédé d'analyse de séparation en sécurité entre des éléments largués en parachute à partir d'un aéronef (1), selon l'une quelconque revendication précédente, dans lequel l'élément largué est un parachutiste qui saute de l'aéronef (1).

6. Procédé d'analyse de séparation en sécurité entre des éléments largués en parachute à partir d'un aéronef (1), selon la revendication 5, dans lequel, afin de calculer le risque d'interférence (7) pour chaque paire de trajectoire (6) d'élément et de zone de déplacement de sac de déploiement (2), les formules suivantes sont appliquées :

$$P_I \;=\; P_T \;*\; P_D \;*\; P_H$$

• $P_I$ est la probabilité qu'un parachutiste subisse une blessure due à une interférence (7) ;
• $P_T$ est la probabilité que la trajectoire du parachutiste croise la zone de déplacement de sac de déploiement (5) ;
• $P_D$ est la probabilité que le sac de déploiement (2) se trouve au niveau d'une zone d'intersection qui est la zone située entre la trajectoire du parachutiste et les limites de la zone de déplacement de sac de déploiement (5) située la plus éloignée de l'aéronef (1) ;
• $P_H$ est la probabilité que, en cas d'interférence (7), le parachutiste subisse une blessure.

7. Procédé d'analyse de séparation en sécurité entre des éléments en parachute à partir d'un aéronef (1), selon la revendication 6, dans lequel, afin de calculer la probabilité de trouver des sacs de déploiement (2) au niveau de la zone d'intersection, le déplacement des sacs de déploiement (2) est déterminé pixel par pixel dans les photogrammes au moyen de la détection de différences de couleur du pixel entre des photogrammes consécutifs.

8. Procédé d'analyse de séparation en sécurité entre des éléments largués en parachute à partir d'un aéronef (1), selon l'une quelconque revendication précédente, dans lequel, lors du largage d'une pluralité de sacs de déploiement (2), l'aéronef (1), les sacs de déploiement (2) et les sangles d'ouverture automatique (3) sont dispatchés manuellement et sont suivis pendant une certaine période de temps.

9. Procédé d'analyse de séparation en sécurité entre des éléments largués en parachute à partir d'un aéronef (1), selon la revendication 8, dans lequel la période de temps est comprise entre vingt-cinq et trente-cinq secondes.

10. Procédé d'analyse de séparation en sécurité entre des éléments largués en parachute à partir d'un aéronef (1), selon la revendication 9, dans lequel le temps d'enregistrement pour les éléments largués est d'environ une seconde.

11. Système d'analyse de séparation en sécurité entre des éléments largués en parachute à partir d'un aéronef (1), le parachute étant déployé à partir d'un sac de déploiement (2) relié à une sangle d'ouverture automatique (3), le système comprenant :

   • au moins un dispositif de caméra configuré pour être situé sur l'aéronef (1) pointant vers une zone de largage, le dispositif de caméra configuré pour enregistrer des images de trajectoires de sacs de déploiement (2) et d'éléments largués à partir de l'aéronef (1) au-dessus de la zone de largage,
   • un programme d'ordinateur de visualisation configuré pour :

      ○ afficher des photogrammes des images enregistrées et identifier sur les photogrammes une zone de déplacement (5) pour chaque sac de déploiement (2) correspondant à une zone dans laquelle le sac de déploiement (2) se déplace sur une période de temps et identifiant les trajectoires (6) de chaque élément largué, la zone de déplacement présentant des limites,
      ○ superposer les photogrammes de chaque trajectoire (6) d'élément et de chaque zone de déplacement de sac de déploiement (2) afin de déterminer le nombre de zones de déplacement de sac de déploiement (2) qui sont traversées par une trajectoire (6) d'élément largué,

   • une unité de traitement conçue pour :

   • calculer le risque d'interférence (7) pour chaque paire de trajectoire (6) d'élément et de zone de déplacement de sac de déploiement (2) pour le nombre total d'images superposées, le nombre total d'images superposées étant calculé comme suit :

   Nombre d'images superposées = Nombre de zones de déplacement de sacs de déploiement (5) * Nombre de trajectoires (6) d'élément * Nombre de dispositifs de caméra

   • calculer la probabilité d'un risque d'interférence (7) global,
   • comparer ledit risque d'interférence (7) global avec un seuil de probabilité permettant d'obtenir une séparation en sécurité entre des éléments largués d'un aéronef (1).

FIG.1

FIG.2

FIG.3

FIG.4

6

$$P = \iint_S C(x,y)\ dx\ dy$$

S

FIG.5